# EUROPEAN PATENT SPECIFICATION

(11) **EP 0 273 750 B1**
(45) Date of publication and mention of the grant of the patent: **22.06.1994**
(21) Application number: 87311469.8
(22) Date of filing: 24.12.1987
(51) Int. Cl.: G06F 1/00, G06F 1/16

(54) **Engaging device for a keyboard for a data processing unit**
Verbindungsvorrichtung für eine Tastatur für einen Rechner
Organe de liaison d'un clavier à un ordinateur

(30) Priority: 25.12.1986 JP 202229/86 U
(43) Date of publication of application: 06.07.1988
(73) Proprietor: BROTHER KOGYO KABUSHIKI KAISHA, Nagoya-shi, Aichi 467 (JP)
(72) Inventor: Ishigami, Michifumi Brother Kogyo K. K., Nagoya-shi Aichi-ken (JP); Sasaki, Toyonori Brother Kogyo K. K., Nagoya-shi Aichi-ken (JP)
(74) Representative: Senior, Alan Murray

(56) References cited:
- FR-A- 2 510 782
- IBM TECHNICAL DISCLOSURE BULLETIN, vol. 24, no. 12, May 1982, page 6556, New York, US; T.F. KELLEY, Jr. et al.: "Keyboard-angle adjustment"

## Description

This invention relates to an engaging device for a keyboard for a data processing unit.

There are known several devices for engaging a separate keyboard with a mating part of a data processing unit. Using these devices, it is known that a connecting member such as a counter-J type hook projecting from an end of the keyboard panel, and a bar-type engaging means arranged under the mating part of data processing unit, are used simultaneously to engage the independent keyboard with the mating part of data processing unit equipped with a printer and CRT, etc. When in use, the counter-J type hook is hung on the bar-type engaging means on the data processing unit and disengaged therefrom when out of use.

Additionally, the independent keyboard is provided with a tilting device on the bottom thereof to tilt the keyboard body while it is being engaged with the data processing unit. However, the counter-J type engaging means is liable to get caught on sleeves of an operator as it projects from the keyboard when the keyboard is disengaged from the data processing unit. This results in an obstacle in operation.

As the hook is fixed to the opposite side of the keyboard from the operator, it is usually difficult for the operator to see clearly the engaging parts when he tilts the keyboard and hangs the hook on the bar-type engaging device and disengages it therefrom. Further, every time a tilting device is used, the independent keyboard panel must be reversed since the tilt device is on the bottom side of the independent keyboard. Such prior art is disclosed in US Patent No. 4516508 and US Patent No. 4620808.

FR-A-2,510,782 discloses an engaging device for a keyboard in accordance with the preamble of claim 1 in which rotation of the keyboard is controlled by a wheel bearing on a curved track.

It is time consuming and tedious to join engaging parts of the keyboard and the data processing unit each time the keyboard is used with the data processing unit. Engaging the keyboard with the data processing unit is often difficult when engaging parts are out of the view of the operator. It is therefore desired that the keyboard and the data processing unit are connected in a one-touch operation. It is accordingly an aim of this invention to provide a keyboard engaging device in which the keyboard can be easily engaged with and disengaged from the data processing unit without prior procedures such as hanging a hook of the keyboard on the bar of the data processing unit and the like.

According to the present invention there is provided a keyboard engaging device for use in a data processing unit having a keyboard mounted on a body of said data processing unit, said keyboard engaging device comprising:
engaging means formed at a front lower portion of said body of said data processing unit and extending rearwardly in said body; and
two similar leg members rotatably mounted on a rearward end of said keyboard and disengageably engaging with said engaging means, characterised in that:
each of said leg members comprises an outer cylinder having a leg piece extending tangentially therefrom, and a circumferential step formed on an inner surface at one end thereof;
a recess disposed in said step;
an inner cylinder housed in and coaxial with said outer cylinder; and in that said keyboard includes a cylindrical shaft (24), said shaft being insertable into a hollow portion between said outer (16) and inner (18) cylinders of said leg member, rotatably supporting said leg member, and having a projection (26) engageable in said recess of said projection of said outer cylinder on an outer surface thereof.

In preferred embodiments, by rotating leg members on both sides of the keyboard, engaging leg pieces of the leg members can be directed to be inserted in slots of the data processing unit, thus enabling the keyboard to be connected to the data processing unit easily. The keyboard need not be reversed each time it is engaged with the data processing unit.

The invention will be more clearly understood from the following description which is given by way of example only with reference to the accompanying drawings in which:-
Figure 1 is a perspective illustration showing a word processor in which a keyboard engaging device is used according to one preferred embodiment of the present invention.
Figure 2 is an exploded perspective illustration showing major bottom parts of the independent keyboard of Figure 1.
Figure 3 is a perspective illustration showing major parts of the engaging members.
Figure 4 is a side elevational illustration showing major parts of Fig. 1.
Figure 5 is a perspective illustration showing major parts of Figure 4 taken along an arrow C.

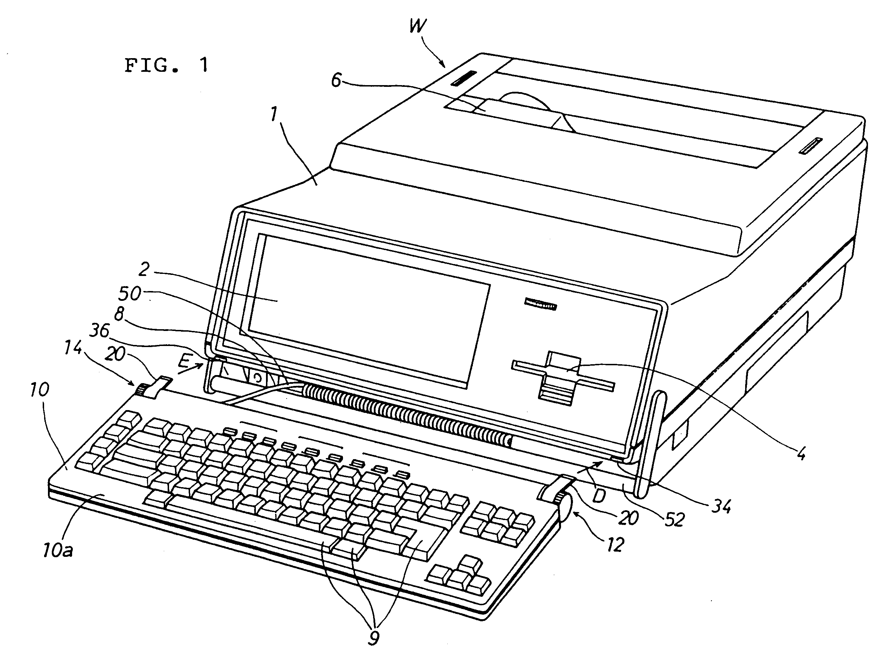

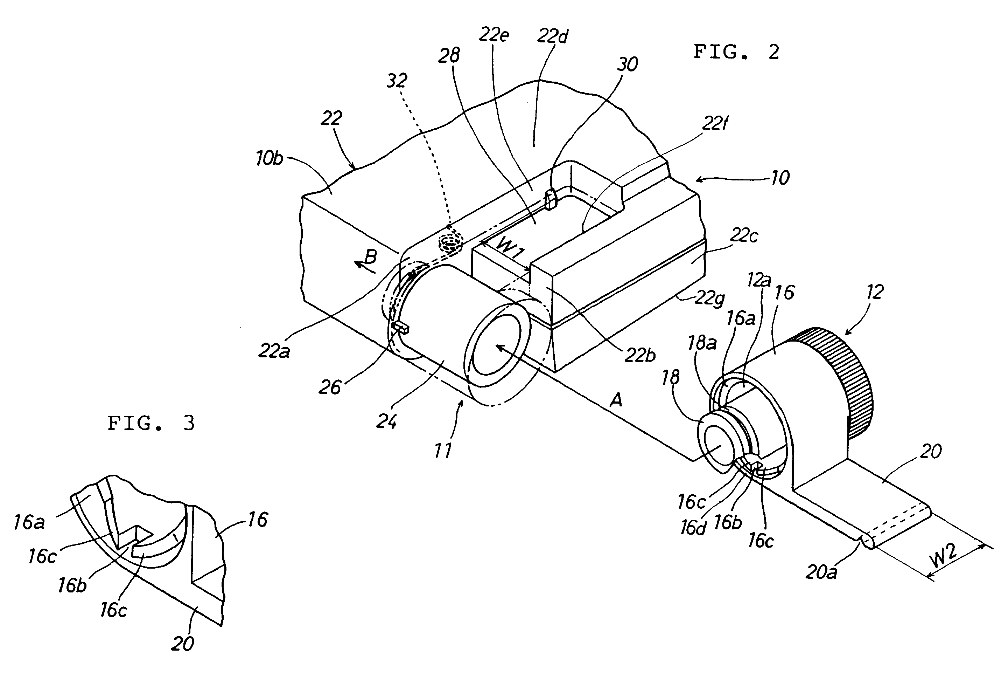

Referring now to Figure 1, a word processor W is equipped with a CRT 2 housed at the front of a body cover 1, a floppy disk drive equipment 4, a typewheel printer 6 housed at the rear of the body cover 1, and an independent keyboard 10 connected to one end of a curl cord 8. This independent keyboard is provided with arrays of keys 9 on its front surface 10a and a pair of recesses or housings 11 at both rear corners of the keyboard body 22 which are cut away from the front surface 10a and the rear surface 10b. This independent keyboard 10 is also on both sides thereof provided with leg members 12 and 14 respectively which are of symmetrical construction with each other. The description of leg members is made in detail only for member 12 with reference to Figure 2.

The leg member 12 is formed with rolled contour and provided with an outer cylinder 16 having a bottom 16d. An inner cylinder 18, one end of which is connected to the bottom of the outer cylinder 16 projects from the open end of the outer cylinder 16 and a leg piece 20 of suitable length extending from the outer cylinder 16 in tangential direction thereof.

Near the end of the leg piece 20 is formed a recess 20a parallel with an axis of the outer cylinder 16. A circumferential recess 18a is formed on the free end of the inner cylinder 18. Further, there is a stepped peripheral recess 16a formed on inner periphery at one end of the outer cylinder 16.

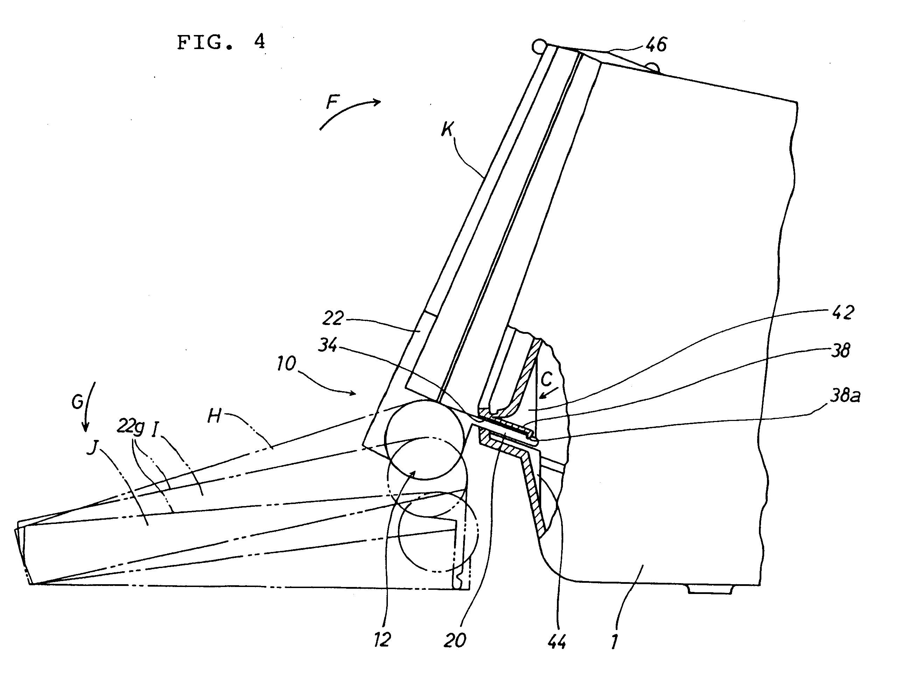

On a portion of stepped recess 16a at the bottom 16d of the outer cylinder 16 is arranged a rectangular recess 16b extending in the diametrical direction and normal to the direction of the leg piece 20. On each side of rectangular recess 16b is formed an inclined part 16c of the step defining recess 16a which extends away therefrom (see Figure 3). The leg piece 20 of the leg member 12 can be received in the housing 11 of the keyboard body 22.

A pair of walls 22a and 22b are formed at each rear end corner of the keyboard body 22 when the housings 11 are formed at the rear end corners. The wall 22a is parallel with a side plane 22c of the keyboard body 22 and the wall 22b is normal thereto. A cylindrical shaft 24 projects normally from the wall 22a and a rectangular convex part 26 is formed on a circumferential surface of the cylindrical shaft 24 at the junction between the cylindrical shaft 24 and the parallel plane 22a in order to engage in the rectangular recess 16b of the outer cylinder 16.

Further, a recess 28 having a suitable depth and adjacent to the parallel wall 22a is formed on a lower surface 22d of the keyboard body and a convex wedge 30 is formed on a side 22e, connecting with the wall 22a, of the recess 28. The width W1 between the convex wedge 30 and the opposite side 22f of recess 28 is a little smaller than a width W2 of the leg piece 20 of leg member 12 (0.1 to 0.4 mm according to this embodiment).

On the other hand, the normal wall 22b is provided with two inclined faces joining at the centre of the wall 22b. The faces are normal to the lower surface 22d and an upper surface 22g of keyboard body 22. The leg member 12 is coupled in the direction shown by an arrow A to the cylindrical shaft 24 of keyboard body 22 by inserting the cylindrical shaft 24 into a hollow cylindrical portion 12a between the outer cylinder 16 and the inner cylinder 18. The inner cylinder 18 is passed through the cylindrical shaft 24 and projects into the inside of the keyboard body 22.

One end of a torsion coil spring 32 is arranged inside the keyboard body 22 and engaged with the circumferential recess 18a. The leg member 12 is urged by the spring 32 in the direction shown by an arrow B and thereby the leg member 12 is connected rotatably with the keyboard body 22. The upper surface 22g of keyboard body 22 is inclined approximately 5 degrees to the lower surface 22d.

There are two lateral engaging holes 34, 36 provided at a lower front part of a body cover 1 of the word processor to be engaged with the leg pieces 20 of the leg members 12. These engaging holes 34 and 36 are of the same configuration and are provided at the same altitude and the same spacing as those of the leg members 12 and 14.

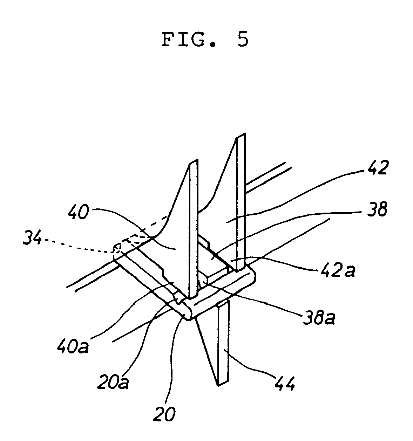

Being the same configuration, the engaging hole 34 is explained with reference to Figure 4 and Figure 5. The size of engaging hole 34 of body cover 1 is a little larger than that of leg piece 20 of leg member 12 and it is inclined downward approximately 18 degrees from the horizontal. On an upper edge of the hole 34 is mounted a plastic locking plate 38 inclining rearwardly and downwardly. The width of the locking plate 38 is smaller than that of leg piece 20 of leg member 12.

A convex part 38a is provided on the lower inward end of locking plate 38 in order to be engaged with the recess 20a of the leg piece 20. On both sides of this locking plate 38 are provided a pair of ribs 40, 42 which extend from the upper edge of engaging hole 34 along the engaging hole 34 with a downward inclination, and are closer together than the width of leg piece 20. The under sides of the ribs 40 and 42 which are interconnected with the upper edge of the engaging hole 34 are formed with projected portions 40a and 42a.

Under the locking plate 38 is disposed a lower rib 44 which extends in the direction of engaging hole 34 from a position a little lower than the lower edge of engaging hole 34. Moreover, the outer and lower ends of engaging hole 34 are chamfered to approximately 45 degrees. Thus, a part to be engaged by the leg piece 20 of the leg member 12 is constructed by the engaging hole 34, the locking plate 38, the ribs 40 and 42 and the lower rib 44.

The curl cord 8 is used to connect the data processing unit and the keyboard 10 electrically and housed in a rectangular shaped curl cord housing recess 50 provided on the lower front of the body cover 1. Moreover, on the front of the body cover 1 is pivotally provided a carrying handle 52.

In operation, as shown in Figure 1, the keyboard engaging device functions such that the leg member 12 projecting from independent keyboard 10 is rotated first and then the leg piece 20 of the leg member 12 is inclined lower to be inserted into the engaging hole 34 (as shown by arrow D). The leg piece 20 of the leg member 14 is in the same manner inserted into the engaging hole 36 (as shown by arrow E).

Thereby, the leg piece 20 is passed through the engaging hole 34 and guided by ribs 40, 42 and lower rib 44 and further guided by the projecting portions 40a, 42a of ribs 40 and 42. When the leg piece 20 is further inserted and the top of leg piece 20 reaches the convex part 38a of locking plate 38, the leg piece 20 is further moved to raise the convex part.

Finally, the convex part 38a is engaged with the recess 20a of the leg piece 20. This engaging concludes engaging of leg piece 20 and the independent keyboard 10 is engaged with the cover 1 of the word processor. Under this engaging condition, the independent keyboard 10 is rotated in the direction shown by arrow F in Figure 4 and tightly fit onto the body cover 1. Then, the independent keyboard 10 is retained and housed by the operation of a holding device 46 capable of holdling the keyboard 10 coupled with the force of spring which is rotatably provided on the upper part of the body cover 1 (as shown by K in Figure 4). In so doing, the CRT 2 screen can be protected with the keyboard 10 and the whole of word processor W can be transferred easily with the keyboard 10 by holding the transferring handle 52.

When the keyboard is closed and housed, the plane 22b and leg piece 20 are in contact. The independent keyboard 10 can be rotated in the direction shown by an arrow G in Figure 4 and placed with one edge in contact with the desk. In this case, keys on keyboard 10 can be depressed for keying operations. The keyboard after being rotated and placed on the desk is marked H as shown in two-dot lines in Figure 4 where the upper surface of independent keyboard 10 is inclined approximately 20 degrees according to this embodiment of the present invention.

Moreover, the inclined parts 16c are provided on both sides of the recess 16b to prevent the rectangular convex part 26 on keyboard 22 from easily riding up the said parts 16c within a range of angles in which the independent keyboard 10 is rotated from closed position to the position marked H in Figure 4. When the independent keyboard 10 is in the closed or housed position, the total weight of the keyboard 10 is supported by fulcrum points which are formed by the contact between the leg piece 20 of leg member 12 and the engaged parts consisting of the engaging hole 34, the locking plate 38, the ribs 40 and 42 and the lower rib 44.

Similarly, in position H the total working force consisting of the weight of keyboard 10 and a force applied on keyboard 10 by an operator during keying operations is supported by such fulcrum points. Since the engaging hole 34, the projected portions 40a and 42a of ribs 40 and 42, and the upper surface of lower rib 44 are integrally formed and on an inclined slope, the total weight is always supported via the fulcrum points, and the leg member 12 is not withdrawn out of the engaging hole 34. The pressure of keying operations is applied to depress the leg member 12 further into the engaging hole 34.

According to this embodiment, the convex part 38a of locking plate 38 is engaged with the recess 20a of leg piece 20, thus preventing the leg member 12 from being disengaged from the engaging hole 34. The locking plate 38 can be dispensed with according to the degree of slope of the engaging hole 34, which can also be arranged horizontally. Withdrawing the leg member 12 in an upward inclined direction bends the locking plate 38, and releases the engaging of convex part 38a with the recess 20a. The leg piece 20 is withdrawn along the rib 40, 42, lower rib 44 and engaging hole 34 and thus the independent keyboard 10 can be removed from the body cover 1.

After disengagement, the keyboard 10 can be set on a table for keying. The leg pieces 20 can be used to set the keyboard 10 on the table surface inclined at some degree. For this purpose, the knurled knob of leg member 12 is gripped and rotated in clockwise direction in Figure 4. The inclined part 16c of the stepped peripheral recess 16a of the outer cylinder 16 rides on the rectangular convex projections 26, and the leg member 12 is moved in the opposite direction to that shown by an arrow B shown in Figure 2.

The knurling knob is further rotated to engage the rectangular convex part 26 in the rectangular recess 16b, whereon the leg member 12 to be moved in the direction shown by an arrow B shown in Figure 2 by the spring 32. The keyboard body 22 is now set on table as shown at I in Figure 4, where the leg piece 20 projects from the bottom of keyboard 22. The upper surface 22g of independent keyboard 10 is inclined approximately 12 degrees. Further, the inclination of keyboard 10 can be altered by changing the length of leg piece 20, and set to an arbitrary angle by changing the position either of the rectangular convex part 26 or of the rectangular recess 16b.

From this position, the leg member 12 can be gripped and withdrawn in the opposite direction to an arrow B to release engagement of the rectangular convex part 26 with the rectangular recess 16b. Then, the leg piece 20 is further rotated to be housed in the concave part 28 of the keyboard 10 can then be placed on the table as shown at J in Figure 4 and the upper surface 22g of the keyboard 22 is inclined approximately 5 degrees.

In accordance with the preferred embodiment of the present invention, the pair of leg members 12 and 14 project from opposite forward corners of independent keyboard 10. These leg members can therefore be checked easily from operator's side, thus enabling leg members 12 and 14 to be withdrawn and engaged easily from/with the engaging holes 34 and 36. As previously described, the independent keyboard 10 can also be used under conditions in which it is engaged.

When the keyboard is detached from the word processor body, the knurling knobs of leg members 12 and 14 are rotated without reversing the keyboard 10. Thus the independent keyboard 10 is placed on a table inclinging at some degree for keying operations. During operation, the operator can be relieved of any worry about clothing or sleeves being caught on the projected leg piece 20 of leg member 12 since they are not projected from the upper surface of keyboard 10.

The keying is smoothly operated either when the keyboard is tilted or when it is being engaged with the word processor. The inclination of the keyboard 10 can be easily changed by rotating or by displacing axially the leg member 12. At the same time, the above described functions can be realized by reducing incorporated parts to a minimum and by employing simple construction.

Moreover, a plurality of rectangular convex parts 26 can be arranged on the outer periphery of cylindrical shaft 24 so as to restrict oscillating of the tilting member to a plurality positions or to increase the number of inclination angle positions of keyboard 10. Further, when the body cover 1 is accessed with the keyboard 10, keying operations can be made possible by leaving the curl cord 8 completely housed in the housing recess 50 or by leaving a part of curl cord 8 pulled out of the recess 50.

On the other hand, when the body cover 1 is apart from the keyboard 10, keying operations can be made possible by pulling out the curl cord 8 completely from the housing recess 50. Since the curl cord 8 is housed in the housing recess 50, the keyboard 10 can be connected to the body cover 1 without removing the connector (not shown) for curl cord 8 from the keyboard 10. In this case, as the curl cord 8 is housed securely in the housing recess 50, it does not hinder transfer of keyboard 10 when the keyboard 10 is transferred by holding the transferring handle 52.

Further, when the keyboard 10 is inclined forward (in an opposite direction to that shown by an arrow F in Figure 4) while the keyboard 10 is being engaged with the body cover 1, keying operation is possible free from entangling of curl cord 8 between the body cover 1 and the keyboard 10. At this time, the curl cord 8 is located behind the keyboard 10 and neatly set for functional beauty when viewed from the operator's side.

The invention extends to the parts of the engaging device on the independent keyboard, and the part of the engaging device on the word processor body, when considered separately from each other.

## Claims

1. A keyboard engaging device for use in a data processing unit having a keyboard mounted on a body of said data processing unit, said keyboard engaging device comprising:
engaging means (34, 36, 38) formed at a front lower portion of said body of said data processing unit and extending rearwardly in said body; and
two similar leg members (12) rotatably mounted on a rearward end of said keyboard and disengageably engaging with said engaging means, characterised in that:
each of said leg members comprises an outer cylinder having a leg piece (20) extending tangentially therefrom, and a circumferential step (16a) formed on an inner surface at one end thereof;
a recess (16b) disposed in said step (16a);
an inner cylinder (18) housed in and coaxial with said outer cylinder;
and in that said keyboard includes a cylindrical shaft (24), said shaft being insertable into a hollow portion between said outer (16) and inner (18) cylinders of said leg member, rotatably supporting said leg member, and having a projection (26) engageable in said recess of said projection of said outer cylinder on an outer surface thereof.

2. A keyboard engaging device according to claim 1, including a projection (16c) formed on a portion of the circumferential step and projecting towards said one end of the outer cylinder (16), the recess (16d) being in the centre of the projection.

3. A keyboard engaging device according to any one of the preceding claims including a recess (20a) parallel with the outer cylinder axis and formed at the outer end of the leg piece.

4. A keyboard engaging device according to any one of the preceding claims, wherein there are two similar engaging means spaced from each other, and each of said engaging means comprises:
a lateral engaging hole (34 or 36) formed on a front lower portion of said body of said data processing unit (1) and being slightly larger in size than leg pieces (20) of said leg member (16);
a locking plate (38) attached at its front end on the inner surface of said body, extending rearwardly and downwardly and having a downward convex part (38a), at the rear end thereof, fittable in a recess (20a) of said leg pieces of said leg members when said leg piece is inserted in said engaging hole;
two upper ribs (40, 42) extending rearwardly from an upper edge of said engaging hole, disposed on both sides of said locking plate and having respectively downward projecting portions (40a, 42a); and
a lower rib (44) extending rearwardly from a lower edge of said engaging hole and disposed beneath said two upper ribs and a clearance between said two upper ribs and said lower rib, said clearance guiding said leg piece of said leg member upon its insertion therein.

5. A keyboard engaging device according to any one of claims 1 to 4 including a spring (32) between said inner cylinder (18) of said leg member and said keyboard (10) to urge the leg member towards the keyboard.

6. A keyboard engaging device according to any one of claims 1 to 5, wherein said outer cylinder (16) of said leg member is outwardly knurled and has a bottom and said inner cylinder is connected to said bottom.

7. A keyboard engaging device according to any one of claims 1 to 6, wherein said projection (16c) is inclined at each side of said recess.

8. A keyboard engaging device according to any one of claims 3 to 7, wherein said keyboard has a recess (28) for receiving said leg piece (20) of said leg member (16) when said leg member is rotated about said cylindrical shaft (24) of said keyboard to a corresponding position.

## Patentansprüche

1. Tastaturverbindungsvorrichtung zur Benutzung in einer Datenverarbeitungseinheit mit einer Tastatur, die auf einem Körper der Datenverarbeitungseinheit angebracht ist, wobei die Tastaturverbindungsvorrichtung aufweist:
Verbindungsmittel (34, 36, 38), das an einem vorderen unteren Abschnitt des Körpers der Datenverarbeitungseinheit gebildet ist und sich nach rückwärts in den Körper erstreckt; und
zwei ähnliche Beinteile (12), die drehbar auf einem rückwärtigen Ende der Tastatur angebracht sind und lösbar in Verbindung mit dem Verbindungsmittel stehen,
dadurch gekennzeichnet, daß:
jedes der Beinteile einen äußeren Zylinder mit einem Beinstück (20), das sich tangential davon erstreckt und eine Umfangsstufe (16a), die auf einer inneren Oberfläche des Endes des selben gebildet ist, aufweist;
eine Ausnehmung (16b) in der Stufe (16a) vorgesehen ist;
ein innerer Zylinder (18) in dem äußeren Zylinder und koaxial dazu aufgenommen ist;
und daß die Tastatur eine zylindrische Welle (21) enthält, wobei die Welle in einen hohlen Abschnitt zwischen dem äußeren (16) und dem inneren (18) Zylinder des Beinteiles einführbar ist, drehbar das Beinteil lagert und einen Vorsprung (26) aufweist, der mit der Ausnehmung des Vorsprunges des äußeren Zylinders auf einer äußeren Oberfläche des selben verbindbar ist.

2. Tastaturverbindungsvorrichtung nach Anspruch 1,
mit einem Vorsprung (16c), der auf einem Abschnitt der Umfangsstufe gebildet ist und zu einem Ende des äußeren Zylinders (16) vorsteht, wobei die Ausnehmung (16d) in dem Zentrum des Vorsprunges vorgesehen ist.

3. Tastaturverbindungsvorrichtung nach einem der vorangehenden Ansprüche,
mit einer Ausnehmung (20a) parallel zu der äußeren Zylinderachse, die an dem äußeren Ende des Beinstückes gebildet ist.

4. Tastaturverbindungsvorrichtung nach einem der vorhergehenden Ansprüche,
bei der es zwei ähnliche Verbindungsmittel in einem Abstand voneinander gibt und jedes der Verbindungsmittel aufweist:
ein laterales Verbindungsloch (34 oder 36), das an einem vorderen unteren Abschnitt des Körpers der Datenverarbeitungseinheit (1) gebildet ist und geringfügig größer in der Größe als die Beinstücke (20) des Beinteiles (16) ist;
eine Verriegelungsplatte (38), die an ihrem vorderen Ende auf der inneren Oberfläche des Körpers angebracht ist, sich nach rückwärts und nach unten erstreckt und einen nach unten zeigenden konvexen Teil (38a) an dem hinteren Ende derselben aufweist, die in eine Ausnehmung (20a) der Beinstücke der Beinteile einpaßbar ist, wenn das Beinstück in das Verbindungsloch eingeführt ist;
zwei obere Rippen (40, 42), die sich nach rückwärts von einer oberen Kante des Verbindungsloches erstrecken, auf beiden Seiten der Verriegelungsplatte vorgesehen sind und entsprechende nach unten weisende vorstehende Abschnitte (40a, 42a) aufweisen; und
eine untere Rippe (44), die sich nach rückwärts von einer unteren Kante des Verbindungsloches erstreckt und unterhalb der zwei oberen Rippen vorgesehen ist, wobei ein Zwischenraum zwischen den zwei oberen Rippen und der unteren Rippe vorgesehen ist und der Zwischenraum das Beinstück des Beinteiles bei seinem Einführen dahinein führt.

5. Tastaturverbindungsvorrichtung nach einem der Ansprüche 1 bis 4,
mit einer Feder (32) zwischen dem inneren Zylinder (18) des Beinteiles und der Tastatur (10) zum Drücken des Beinteiles zu der Tastatur.

6. Tastaturverbindungsvorrichtung nach einem der Ansprüche 1 bis 5,
bei der der äußere Zylinder (16) des Beinteiles nach außen gerändelt ist und einen Boden aufweist und der innere Zylinder mit dem Boden verbunden ist.

7. Tastaturverbindungsvorrichtung nach einem der Ansprüche 1 bis 6,
bei der der Vorsprung (16c) an jeder Seite der Ausnehmung geneigt ist.

8. Tastaturverbindungsvorrichtung nach einem der Ansprüche 3 bis 7,
bei der die Tastatur eine Ausnehmung (28) zum Aufnehmen des Beinstückes (20) des Beinteiles (16), wenn das Beinteil um die zylindrische Welle (24) der Tastatur zu einer entsprechenden Position gedreht ist, aufweist.

## Revendications

1. Dispositif de liaison d'un clavier destiné à être utilisé avec un ordinateur ayant un clavier monté sur un corps dudit ordinateur, ledit dispositif de liaison d'un clavier comportant :
des moyens de liaison (34, 36, 38) formés au niveau d'une partie inférieure avant dudit corps dudit ordinateur et s'étendant vers l'arrière dans ledit corps; et
deux éléments (12) formant pattes similaires montés de manière rotative sur une extrémité arrière dudit clavier et étant en liaison de manière libérable avec lesdits moyens de liaison, caractérisé en ce que :
chacun desdits éléments formant pattes comporte un cylindre extérieur ayant une partie formant patte (20) s'étendant tangentiellement à partir de celui-ci, et une marche circonférentielle (16a) formée sur une surface intérieure au niveau d'une première extrémité de celle-ci;
une cavité (16b) agencée dans ladite marche (16a);
un cylindre intérieur (18) reçu dans ledit cylindre extérieur et coaxial à ce dernier; et en ce que ledit clavier comporte un arbre cylindrique (24), ledit arbre pouvant être inséré dans une partie creuse située entre lesdits cylindres extérieur (16) et intérieur (18) desdits éléments formant pattes, supportant de manière rotative ledit élément formant patte, et ayant une saillie (26) située sur sa surface extérieure pouvant être mise en prise dans ladite cavité de ladite marche dudit cylindre extérieur.

2. Dispositif de liaison d'un clavier selon la revendication 1, comportant une saillie (16c) formée sur une partie de la marche circonférentielle et faisant saillie vers ladite première extrémité du cylindre extérieur (16), la cavité (16d) étant située au centre de la saillie.

3. Dispositif de liaison d'un clavier selon l'une quelconque des revendications précédentes, comportant une cavité (20a) parallèle à l'axe du cylindre extérieur et formée au niveau de l'extrémité extérieure de la partie formant patte.

4. Dispositif de liaison d'un clavier selon l'une quelconque des revendications précédentes, dans lequel il y a deux moyens de liaison similaires espacés l'un de l'autre, et chacun desdits moyens de liaison comporte :
un trou de liaison latéral (34 ou 36) formé sur une partie inférieure avant dudit corps dudit ordinateur (1) et étant légèrement plus grand en taille que les parties formant patte (20) dudit élément formant patte (16);
une plaque de verrouillage (38) fixée au niveau de son extrémité avant sur la surface intérieure dudit corps, s'étendant vers l'arrière et vers le bas et ayant une partie convexe vers le bas (38a) située au niveau de l'extrémité arrière de celle-ci, pouvant être agencée dans une cavité (20a) desdites parties formant patte lorsque ladite partie formant patte est insérée dans ledit trou de liaison;
deux nervures supérieures (40, 42) s'étendant vers l'arrière à partir du bord supérieur dudit trou de liaison, agencées sur les deux côtés de ladite plaque de verrouillage et ayant des parties (40a, 40b) faisant saillie vers le bas de manière respective; et
une nervure inférieure (44) s'étendant vers l'arrière à partir du bord inférieur dudit trou de liaison et agencée en dessous desdites deux nervures supérieures et un jeu existant entre lesdites deux nervures supérieures et ladite nervure inférieure, ledit jeu guidant ladite partie formant patte dudit élément formant patte lors de son insertion dans celui-ci.

5. Dispositif de liaison d'un clavier selon l'une quelconque des revendications 1 à 4, comportant un ressort (32)situé entre ledit cylindre intérieur (18) dudit élément formant patte et ledit clavier (10) pour rappeler l'élément formant patte vers le clavier.

6. Dispositif de liaison d'un clavier selon l'une quelconque des revendications 1 à 5, dans lequel ledit cylindre extérieur (16) dudit élément formant patte est moleté extérieurement et a un fond et ledit cylindre intérieur est relié audit fond.

7. Dispositif de liaison d'un clavier selon l'une quelconque des revendications 1 à 6, dans lequel ladite saillie (16c) est inclinée au niveau de chaque côté de ladite cavité.

8. Dispositif de liaison d'un clavier selon l'une quelconque des revendications 3 à 7, dans lequel ledit clavier a une cavité (28) destinée à recevoir ladite partie formant patte (20) dudit élément formant patte (16) lorsque ledit élément formant patte est mis en rotation autour dudit arbre cylindrique (24) dudit clavier vers une position correspondante.
